# EUROPEAN PATENT SPECIFICATION

(11) **EP 0 447 136 B1**
(45) Date of publication and mention of the grant of the patent: **28.06.1995**
(21) Application number: 91301957.6
(22) Date of filing: 08.03.1991
(51) Int. Cl.: H05B 41/36, H05B 41/392

(54) **A method for automatic switching and control of lighting**
Automatische Beleuchtungssteuerungsmethode
Méthode de contrôle automatique d'éclairage

(30) Priority: 10.03.1990 GB 9005454
(43) Date of publication of application: 18.09.1991
(73) Proprietor: TLG plc, Borehamwood, Hertfordshire WD6 1HZ (GB)
(72) Inventor: Bedocs, Lou, Bishops Stortford, Hertfordshire (GB)
(74) Representative: Marsh, Robin Geoffrey

(56) References cited:
- GB-A- 2 187 902
- GB-A- 2 218 506
- US-A- 4 461 977
- US-A- 4 701 669

## Description

The present invention relates to a method for automatic switching and control of lighting to a localised area, the switching of the lighting being dependent on the presence or absence of a person in that localised area and the control of the lighting intensity being dependent on the sensed background level of lighting in that localised area. More particularly, but not exclusively, the invention relates to a lamp fitting and to an automatic control device for controlling the light output of a light source in a "self managed" and "self contained" energy saving luminaire.

It is known to provide control devices for controlling the lighting conditions in a room as a function of the intensity of the daylight entering that room. Such devices operate with a controllable current supply to all the lights in a room, the current supply being varied in dependence on the sensed intensity of the daylight. Whereas such devices achieve a saving of energy, the actual energy saved is limited by the centralised control of the lights many of which may be illuminating a localised area without anyone being present in that area.

British Patent specification A-2 187 902 and United States Specification A-4 701 669 both disclose lighting control systems which are directed to controlling the light intensity at workstations, the former being also arranged to vary the lighting to correct for the relative level with the brightness of a VDU. However both are complex hard wired installations with special controllers and both only consider the position on the assumption that a person is present.

Alternative control devices are available which make use of infra-red detectors to detect the presence of a human being within a given locality. These alternative devices work on the principle that the detection of the presence provides a signal which switches on internal or external lighting thereby providing a form of home or office crime protection. They do not however control the intensity of the light emanating from the light source in dependence on background lighting within the home or office as their primary function is crime prevention as opposed to providing a control system for saving energy.

United States Specification No A-4 461 977, which document forms the base for the preamble of claims 1 and 3, discloses a lighting controller which is controlled by ambient light conditions and the presence of a person. It is a dedicated zone lighting controller for wiring into a complete system and simply ensures that the lights do not come on if a person is not present or if the ambient light level is sufficiently high.

One object of the present invention is to provide a method for automatic control of lighting to a localised area which strives to provide an optimised energy saving by ensuring that the correct amount of lighting is provided to that area for specific requirements.

Accordingly the present invention provides a method of controlling the illumination of a localised area using a light source associated with the localised area, the method including:
sensing for the presence of a person in the localised area;
further sensing the light intensity in the localised area;
establishing a reference level for sensed light intensity;
controlling the light source by a) maintaining the light source in a dark luminous condition when no presence is sensed in the localised area; b) maintaining the light source in a dark luminous condition when a presence is sensed and the sensed light intensity is of at least said reference level and c) switching the light source to a high luminous condition which gives increased lighting in the localised area and maintaining the high luminous condition when a presence is sensed and the sensed light intensity is less than the reference level, characterised in that:
the light source is in a self contained fitting, that the presence and light intensity are sensed from the fitting; and that the method further includes:
establishing minimum and maximum output levels within the high luminous condition for the light source;
adjusting the light source during the presence of the person in said localised area between the minimum and the maximum levels in dependence on the sensed light intensity to maintain a substantially constant light intensity in the localised area;
setting the light source to a dark or dim luminous condition when no presence is sensed for a predetermined time;
and setting the light source to a dark or dim luminous condition when the sensed light intensity has been at or above the reference level for a predetermined period of time and setting the light source to a dark or dim luminous condition when the sensed light intensity has been at or above the reference level for a predetermined period of time.

The present invention also provides an automatic control device for controlling the light output from a light source, including: a lamp fitting incorporating a light source for illuminating a localised area; a presence detector for detecting the presence of a person in the localised area; a light detector for providing a signal related to the light intensity in the localised area; and control means connected to the presence detector, the light detector and the light source for controlling the light source, the control means being arranged to a) maintain the light source in a dark luminous condition when a presence is detected and the light intensity in the localised area is of at least a reference level; b) switch the light source to a high luminous condition which gives increased lighting in the localised area and maintain the light source in the high luminous condition when a presence is detected and the light intensity is less than the reference level; c) switch the light source to a dark luminous condition when detection of a presence ceases and d) switch the light source to a dark luminous condition when the light intensity exceeds the reference level characterised in that the fitting is a self contained lamp fitting having the presence detector, the light detector and the control means included therein and the control means further includes: means for dimming the light source; control circuits for adjusting the light source during the presence of the person in said localised area between minimum and maximum light output levels within the high luminous condition in response to the light intensity detected by said light detector to maintain a substantially constant light intensity in the localised area; first delay means for delaying for a predetermined period when detection of a presence ceases before switching to a dark or dim luminous condition; and second delay means for delaying for a predetermined period when the light intensity exceeds the reference level before switching to a dark or dim luminous condition.

In a preferred embodiment of the lamp fitting the light source is connected to a dimmable electronic ballast, the ballast providing the power to drive the presence detector and the light detector. Conveniently the presence detector is a passive infra-red detection device and the light detector is a photoresponsive device.

The invention will be described further,by way of example, with reference to the accompanying drawings in which:-
Figure 1 is a schematic overview of a lamp fitting in use in accordance with one embodiment of the invention;
Figure 2 shows in enlarged detail one of the components of the lamp fitting of Figure 1;
Figure 3 is a layout of the fitting as seen from below;
Figure 4 is a block schematic diagram of the circuit incorporated in the fitting;
Figure 5 is a further block schematic diagram of the circuit;
Figures 6a and 6b illustrate the detailed circuits incorporated in the fitting.

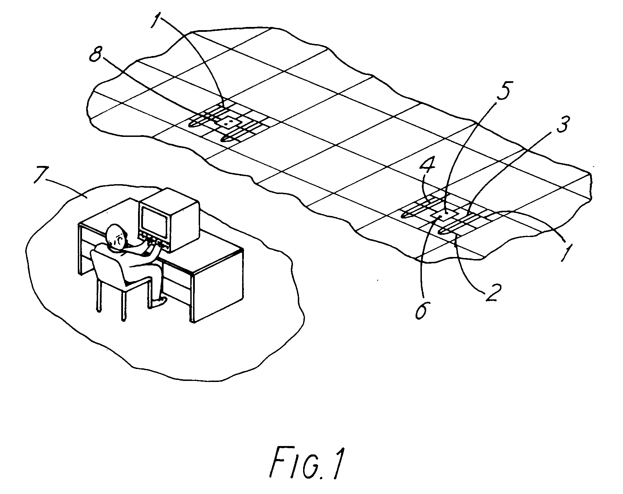

Referring to Figure 1 a pair of lamp fittings 1 are shown installed in a ceiling of an office.The ceiling is typically between 2.4 and 2.7 metres high and the spacing between the centres of the lamp fittings 1 is typically 2.4 to 3.0 metres. Each of the lamp fittings 1 is designed, in accordance with an embodiment of the invention, as an intelligent luminaire by which is meant that it incorporates a lighting control system that automatically adjusts its output to maintain a constant illumination onto a desk only when an occupant is within its operation range. Each luminaire consists of a self-contained 600 by 600mm recessed unit with a 16 cell low brightness aluminium reflector optic 2 suitable for VDU screen usage. The luminaire is fitted with energy efficient twin 40W 2L fluorescent lamps 3,4 the output of which is reflected by the reflector optic 2 to desired areas 7, only one of which is shown in Figure 1.

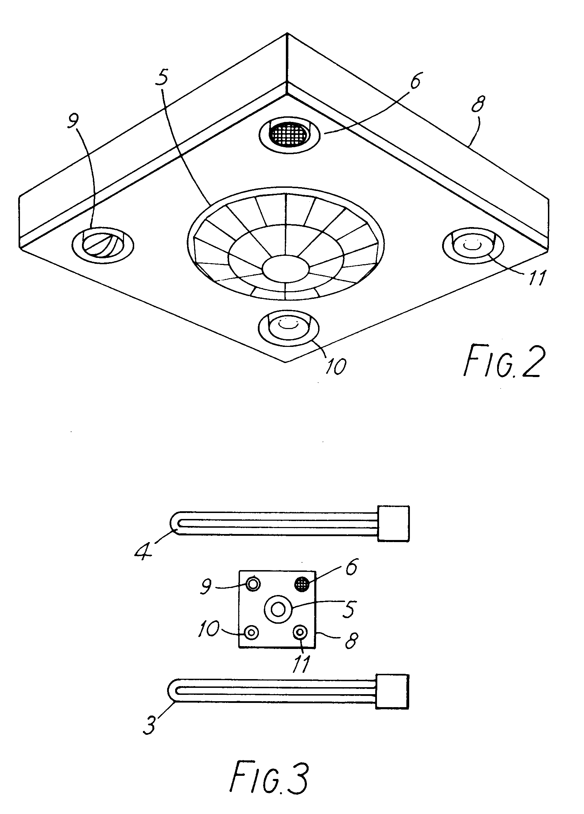

In the centre of the reflector optic 2 is mounted a central control plate 8, see Figures 2 and 3, in which is mounted a passive infra-red presence detector 5 that brightens up the luminaire when a person is in the response area. The control plate 8 is also provided with a photocell 6 for detecting the light level in the operation range, a rotary switch 9 for adjusting the maximum output of the the lamps 3,4 and two further locations 10,11 which can be used for mounting additional sensors ,indicators or emergency lighting. The luminaire is connected to a lighting ring power supply and requires no other control or switching elements.

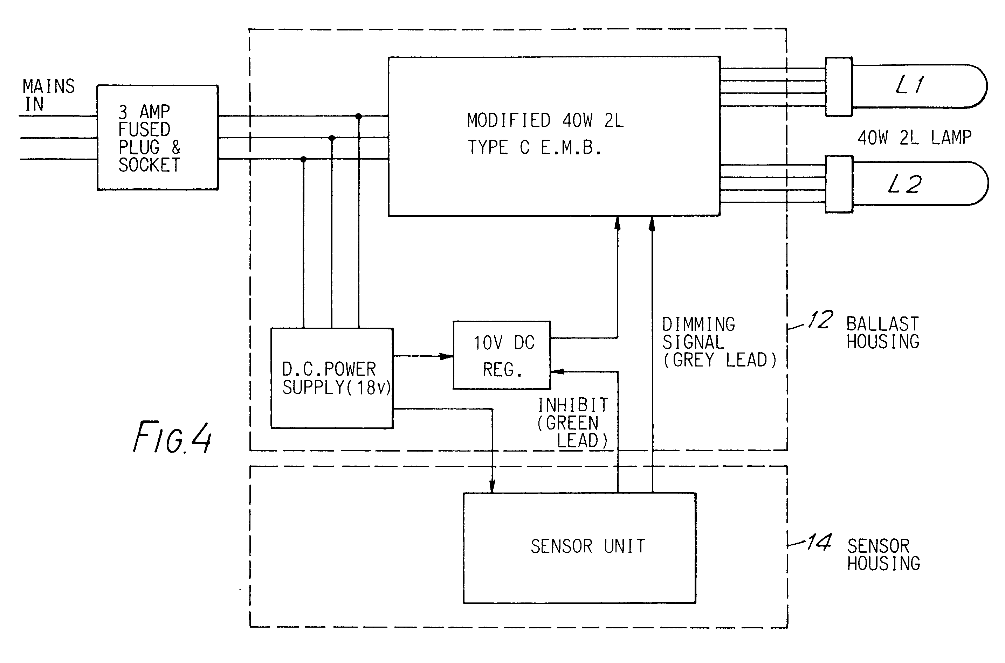

Figure 4 shows in block diagram form the overall luminaire control circuit which is split into two distinct parts, namely a Ballast housing 12 and a Sensor housing 14. The Sensor housing 14 contains a control pcb incorporating passive infra-red (PIR) and photocell detection circuits, while the Ballast housing 12 contains a 40W 2L Type C Electronic Mains Ballast (EMB) as well as a low voltage power supply (LVPS). The Sensor unit can both 'dim' and turn 'on' and 'off' the ballast in accordance with a given stimulus such as ambient conditions and/or personnel detection.

The luminaire control circuit is designed to be connected to the mains supply (220V/240V ac rms) at all times and is not subject to switch drops. The circuit is double protected via an external three Amp fuse in the mains plug and socket, as well as a 2. 7 Amp internal fuse in the ballast housing 12. The circuit will light the lamps L1,L2 only if a person is detected by the PIR as being within viewing range and if the light received back at the photocell detector is below a set regulating level. The light level will be adjusted automatically to hold the working illuminance at a constant level irrespective of ambient contribution from windows etc. If ambient light conditions become very high the EMB is capable of dimming down the lamp power. Should the ambient conditions lead to the light level viewed by the photocell exceeding a threshold value,for example twice the set regulating level, then the circuit will switch off after a predetermined period, for example fifteen minutes, after its last detection. To allow the circuit to start the lamps L1,L2 again the light level of the photocell detector must fall back to the regulating level or below. Should the person leave the detection area at any time the circuit will automatically turn off after a set period, for example fifteen minutes, after its last detection.

The dimming function is achieved by varying a port on a Custom Control I.C. between three and five volts (five volts full power) using a grey sensor control lead. The on/off functionality is achieved by switching the low voltage supply to the control circuits of the EMB via an inhibit signal to a regulator using a green sensor lead.

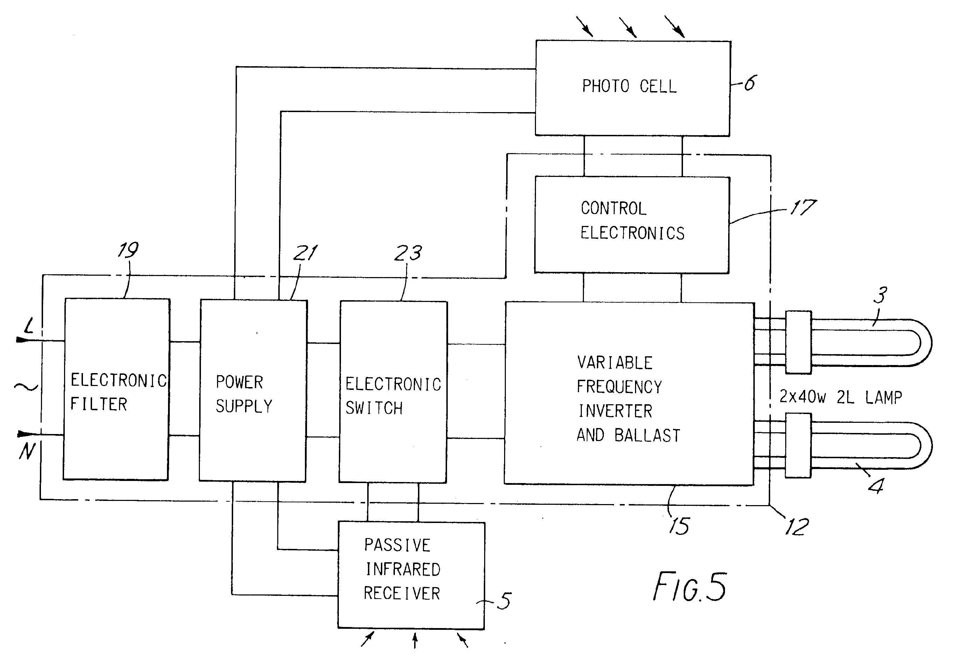

Figure 5 also shows in block form an overall luminaire control circuit with particular reference to the embodiment of Figures 1 to 3. In this embodiment the two 40W 2L lamps 3,4 are shown connected to a variable frequency electronic ballast 15. The ballast 15 has a dc level part into which the output of the photocell 6 is fed via suitable control electronics 17. The incoming mains is connected via an electronic filter 19 to a power supply unit 21 including a six part relay which is in turn connected to the infra-red detector 5. The output of the IR detector controls the ballast circuit 15 via an electronic switch 23. The output of the lamps 3,4 is also controlled by the radial distribution reflector optic 2. The two detectors 5,6 are set in the trim of the reflector optic 2 or into a channel within the optic 2 separating the two lamps 3,4.

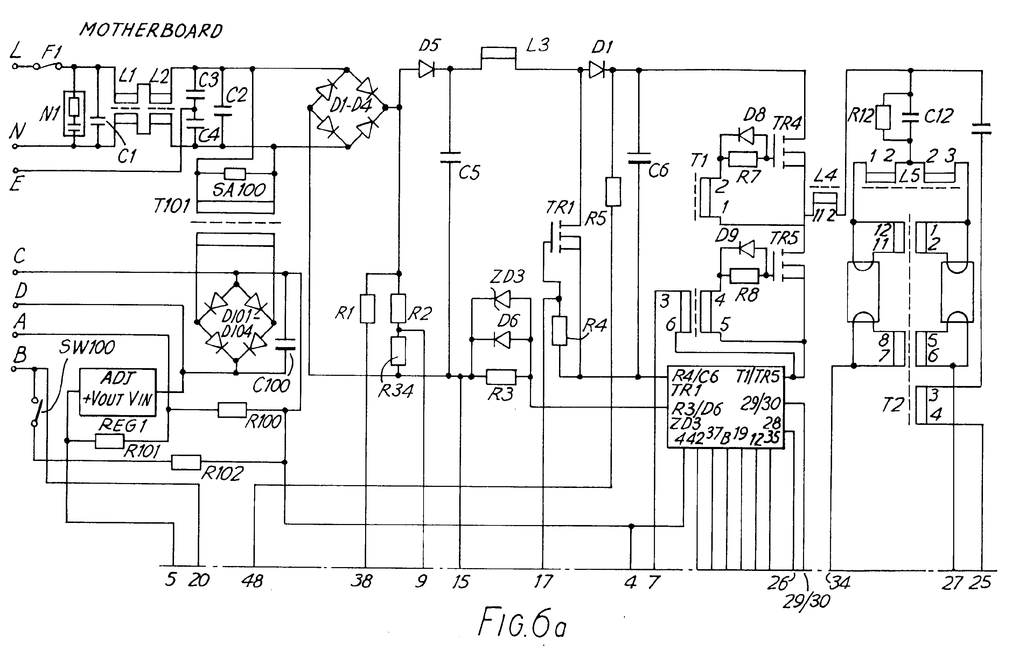

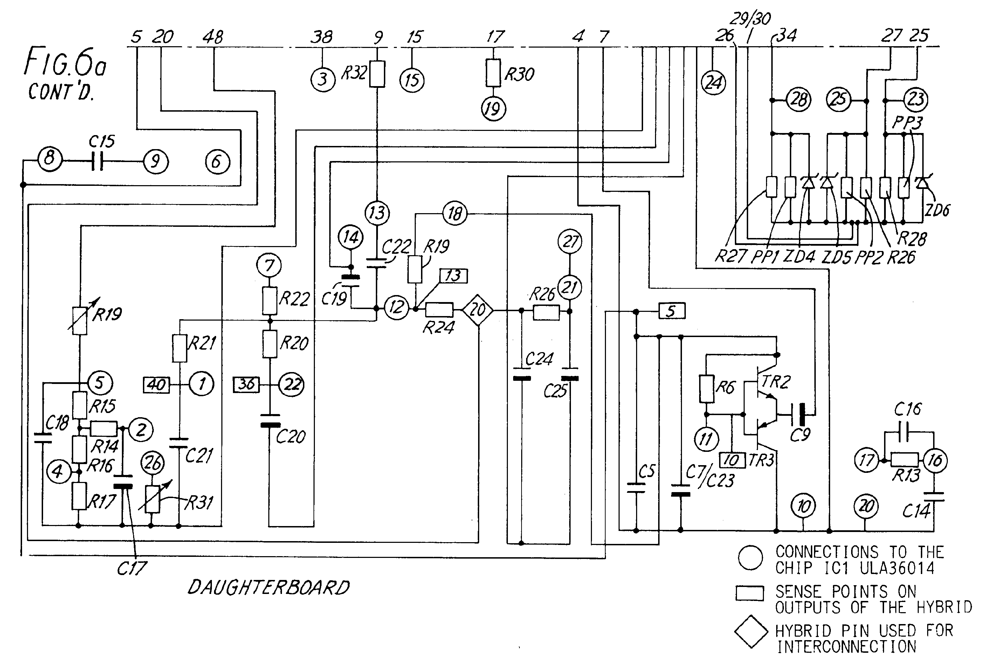

Figure 6a illustrates the basic circuitry for the Electronic Mains Ballast(EMB) and Low Voltage Power supply(LVPS). The layout shown is with relation to a hybrid layout where the control circuitry is held on a single ceramic hybrid. Much of the detail of the operation of the ballast is well known in the art and thus only a brief description of its major components is set out below.

An input RFI filter circuit is provided which in Figure 6a comprises a set of capacitors C1,C2,C3,and C4 together with chokes L1,L2, and the output from the filter circuit is coupled to a bridge rectifier comprising diodes D1-D4 to provide a.c. to d.c. conversion. A preregulator is incorporated to produce a sinusoidal input current to the required harmonic limits while at the same time producing unity power factor and a constant 375 V d.c. supply on a reservoir capacitor C6, irrespective of the load (100% to 25% lamp power). A high frequency inverter stage is coupled to the preregulator and includes drive circuitry for a pair of bridge transistors TR4 and TR5.Conventional lamp ballasting and cathode heating circuitry is provided designed to produce the correct preheat and prestrike characteric as well as running conditions for the lamps in conjunction with the ballast control circuits. In addition control circuitry and logic is provided to control starting and running of the lamps as well as assessing fault conditions such as lamps missing or deactivated, low reservoir capacitor voltages or a low control supply voltage. The last of these conditions is important in the operation of the lamp fitting in the embodiment in that if the 10V d.c. supply to the control circuits drops below 8.5V d.c. the ballast automatically stops the inverter, turning the lamps off. This is similar to the manner in which the lamp fitting turns its lamps on and off by switching the low voltage supply between 10V d.c. and 1.2 V d.c.

The circuit embodiment of Figure 6a includes further features to those normally found in a conventional ballast. There is provided a neon indicator N1 to identify to service engineers and electricians that mains supply is still connected to the fitting even though the lamps may be out. A switch SW100 is provided which limits the maximum voltage that can be applied to the dim port between 4V d.c. and 5V d.c. In this way one can limit the maximum lamp power from between 75% and 100%.Thus one can simulate the use of 36w 2L lamps instead of 40w 2L lamps for installations where ceiling spacing of fittings is small and high maximum illuminances are measured. A surge arrestor SA100 is used to avoid mains borne transients from causing an over voltage on C6, the main reservoir capacitor. This is an important feature since the lamp fitting will remain connected to the mains even in an unloaded state. This arrestor also aids to the circuit passing the mains transient test procedures to acquire VDE approvals.

A major feature which distinguishes the circuitry of Figure 6a over conventional ballast circuitry is the use made of a low voltage supply generated via a transformer T101,diodes D101-D104 and a capacitor C100. This low voltage supply is both used to generate 10 d.c. supply via regulator REG1 as well as to generate a d.c. supply of between 14V and 31V, dependent on mains level, for the sensor module.The ballast housing has three main leads with associated plug and socket, eight lamp leads with 2L lamp holders and four signal leads for connection to the sensor module, two for the d.c. power supply discussed above and two for dimming and turning the ballast 'on' and 'off'.

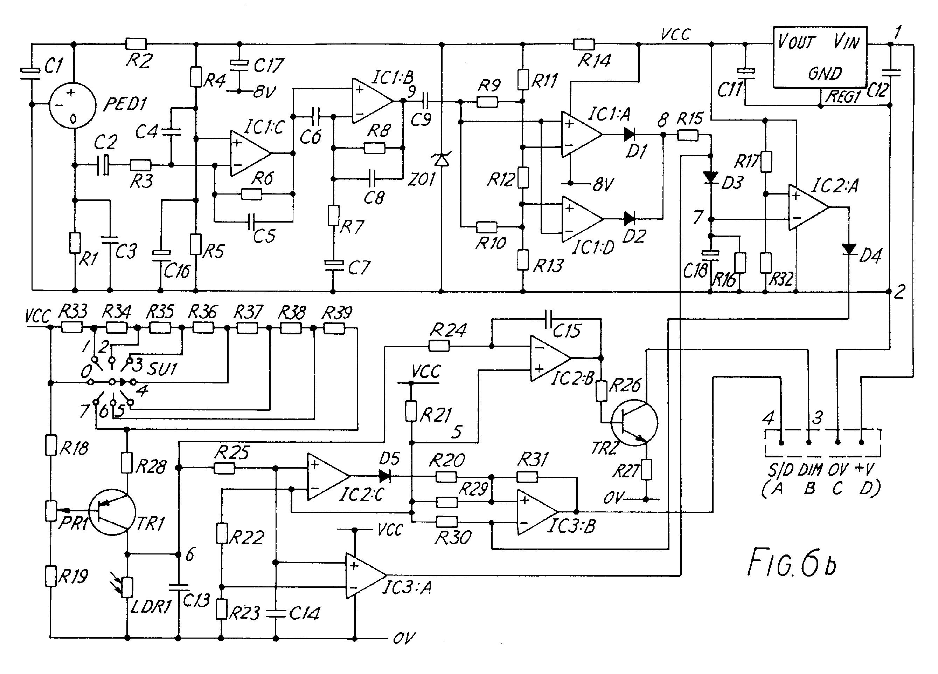

Figure 6b illustrates the circuitry used to control the ballast described above with the terminals A,B,C,D connected to the corresponding lettered terminals of Figure 6a. The circuitry of Figure 6b may be considered in three distinct parts namely the power supply,the PIR detector circuit and the photocell and light level latches.

The power supply is provided from the raw supply from the ballast circuit(14-31 V d.c.) which is double regulated via a chip regulator circuit(8V d.c.) and a resistor/zener regulator (6.2 V d.c.). This prevents any drop in load or noise from affecting the rails in the sensor and in particular the high gain amplifier which could result in retrigger. The most likely cause of such a load drop is when the ballast turns off.

The PIR detector circuit forms the top part of the circuit of Figure 6b and is itself subdivided into four distinct parts,these are:-
1. The passive infra-red detector PED 1 is located at the focal point of a Fresnel lens system which focusses infra-red radiation onto its active elements thereby generating an output signal when a person moves into the viewing area of the fitting which at normal ceiling heights (2.8m) is a circle of radius 2.5 meters. The device must be mounted accurately with respect to the lens system otherwise the sensitivity of the device as well as its viewing area may be affected. It must likewise be protected during handling and soldering as well as from draughts across its body during operation. The signal output of the sensor when someone moves across the viewing area is typically an ac signal of frequency between 0.5 and 5Hz.
2. A high gain band pass amplifier is provided including operational amplifiers C and D which are used to amplify the useful detection signals. The band pass range is between 0.5 and 5Hz approximately with a peak gain at 1.5Hz of 67dB (approximately 2000 times). The amplifier includes an inverting section lC1:C and a non inverting section lC1:B. The signal is superimposed onto a dc level set by R4 and R5 at half rail (approximately 3V dc). The signal will be inverted by the first stage of gain, however, since there are both positive and negative threshold detectors this is of little consequence and produces a summing point for either dual or quad element PIR detectors to improve sensitivity. Due to high value resistors and capacitors the amplifier requires a one minute settling period after mains application.
3. A window comparator is provided in which the amplified signal and some spurious background noise are ac coupled via C9 Into a threshold detector.The resistors R9 and R10 set the ac signal accurately to the mid point of the window which is 320mV wide at plus or minus 160mV. Thus a signal exceeding these levels will trigger either lC1:A or lC1:D. This triggering of the A and D amplifiers, charges C10 via R15 to approximately 6V. The capacitor C10 is 100uf and is in parallel with a lM8 discharge resistor, thus giving approximately a fifteen minute discharge period. The capacitor voltage is one of the inputs to the timer latch.
4. An operational amplifier lC2:A forms an integral part of the timer circuits. The main timing capacitor C10 forms one input while the non inverting input is set by R17 and R32 to about 0.2V. Thus on charging the capacitor the output of this amplifier goes low allowing the shut-down latch lC3:B to be acted upon by the light level circuitry. Once discharged to below 0.2V, lC2:A output is driven high forcing lC3:B inverting input high and resulting in the shutdown latch having a low output which when connected to the 'Adjust' terminal of the ballast regulator (REG 1), turns off the 10Vdc supply. The lamps thus extinguish.

The photocell and light level latches will now be described. A transistor TR1 and a switch SW1, together with their associated resistors form a switchable constant current generator, switch SW1 is factory preset to position 4 where the circuit will attempt to achieve a regulating light level of some 120 LUX. The current is applied to a light dependent resistor (LDR1) which yields a voltage related to light level on the device. This voltage is input to an error amplifier/integrator formed by lC2:B the output of which controls TR2 producing a voltage on the dim wire D (grey lead) of between 3V and 5V (5V full power). The resistors R27 on the sensor and R24 on the ballast(figure 6a) set the minimum level at 3V while R102 on the ballast limits the maximum dc voltage to 4V instead of 5V which reduces maximum lamp power with the use of switch SW100.

The net effect of the above variation in dim voltage is to adjust lamp output until the voltage across the LDR1 equals that reference voltage produced across R22 and R23. Once achieved the circuit is said to be under stable conditions and will maintain this light level, any increase in ambient conditions reduces LDR 1 output and increase the drive on the base of TR2 thus reducing dim output voltage and dimming the lamps. A reduction in ambient has an opposite effect, the speed of response in both cases depending upon the size of the error, at the integrator.

In this specific embodiment the ballast is only capable of dimming to 25% lamp power beyond which no further compensation as described above can take place. Thus if ambient light continues to increase so the LDR voltage will fall until it is below the reference at the node between R22 and R23. Once this occurs lC3:A clamps the output of the threshold detectors low, resulting in no further personnel detection. Once any residual charge has been removed from C10 via R16 the circuit will clamp the shutdown S/D output low, switching the lamps off.

To re-establish the lamps it is not sufficient to reduce the ambient such that the second threshold is exceeded since although this will allow lC3:A output to ba released the circuit is configured in such a way as not to reset the S/D latch lC3:B. To achieve a high output on lC3:B one must actively force it high by reducing ambient to below the set regulating level (typically set at 120 Lux). This allows lC2:C to force the S/D latch output high and re-establish running of the lamps.

The switchable constant current source is required to allow for different room reflectance conditions. If the room is primarily lightly coloured more light can be received back at the LDR causing dimming even though one may be requiring the ballast to run at full power (eg. in night time conditions). Thus by switching to a high current from the source one increases the LDR voltage allowing lamp power to increase.

The luminaire described above will only come on when there is a human being within its effective area and will top up the task illuminance automatically as daylight fades. This self managed luminaire requires no switch drops and is suitable for small private or large open area lighting. It provides very high energy savings (60-80%), tremendous flexibility for space planning as no control wires are needed and no additional signals are required to activate the luminaire.

## Claims

1. A method of controlling the illumination of a localised area (7) using a light source (3,4) associated with the localised area, the method including:
sensing for the presence of a person in the localised area;
further sensing the light intensity in the localised area;
establishing a reference level for sensed light intensity;
controlling the light source by a) maintaining the light source in a dark luminous condition when no presence is sensed in the localised area; b) maintaining the light source in a dark luminous condition when a presence is sensed and the sensed light intensity is of at least said reference level and c) switching the light source to a high luminous condition which gives increased lighting in the localised area and maintaining the high luminous condition when a presence is sensed and the sensed light intensity is less than the reference level, characterised in that:
the light source (3,4) is in a self contained fitting (1), that the presence and light intensity are sensed from the fitting; and that the method further includes:
establishing minimum and maximum output levels within the high luminous condition for the light source;
adjusting the light source during the presence of the person in said localised area between the minimum and the maximum levels in dependence on the sensed light intensity to maintain a substantially constant light intensity in the localised area;
setting the light source to a dark or dim luminous condition when no presence is sensed for a predetermined time;
and setting the light source to a dark or dim luminous condition when the sensed light intensity has been at or above the reference level for a predetermined period of time.

2. A method according to claim 1 further including:
establishing maximum and minimum values of the reference level for sensed light intensity;
switching the light source to the high luminous condition when a presence is sensed and the light intensity is less than the predetermined minimum reference level;
maintaining the high luminous condition when a presence is sensed and the sensed light intensity is less than the predetermined maximum reference level;
and setting the light source to a dark or dim luminous condition when the sensed light intensity has been at or above the predetermined maximum reference level for a predetermined period of time.

3. A lighting arrangement including: a lamp fitting (1) incorporating a light source (3,4) for illuminating a localised area (7); a presence detector (5) for detecting the presence of a person in the localised area (7); a light detector (6) for providing a signal related to the light intensity in the localised area; and control means connected to the presence detector, the light detector and the light source for controlling the light source, the control means being arranged to a) maintain the light source in a dark luminous condition when a presence is detected and the light intensity in the localised area is of at least a reference level; b) switch the light source to a high luminous condition which gives increased lighting in the localised area and maintain the light source in the high luminous condition when a presence is detected and the light intensity is less than the reference level; c) switch the light source to a dark luminous condition when detection of a presence ceases and d) switch the light source to a dark luminous condition when the light intensity exceeds the reference level characterised in that the fitting is a self contained lamp fitting (1) having the presence detector (5), the light detector (6) and the control means included therein and the control means further includes: means (12) for dimming the light source; control circuits for adjusting the light source during the presence of the person in said localised area between minimum and maximum light output levels within the high luminous condition in response to the light intensity detected by said light detector to maintain a substantially constant light intensity in the localised area; first delay means for delaying for a predetermined period when detection of a presence ceases before switching to a dark or dim luminous condition; and second delay means for delaying for a predetermined period when the light intensity exceeds the reference level before switching to a dark or dim luminous condition.

4. A lighting arrangement according to claim 3 arranged to a) switch the light source to a high luminous condition which gives increased lighting in the localised area when a presence is detected and the detected light intensity is less than a first, minimum value of the reference level, b) maintain the light source in the high luminous condition when a presence is detected and the detected light intensity is less than a second, maximum value of the reference level and c) switch the light source to a dark or dim luminous condition when the detected light intensity exceeds the maximum reference level.

5. A lighting arrangement as claimed in claim 4 in which the control circuits are arranged to inhibit the operation of the presence detector (5) when the detected light intensity exceeds the maximum reference level.

6. A lighting arrangement as claimed in any one of claims 3 to 5 in which the means for dimming is a dimmable electronic ballast (12) electrically coupled to the light source (3,4) and provides a power supply (21) to drive the presence detector (5) and light detector (6).

7. A lighting arrangement as claimed in any one of claims 3 to 6 in which said presence detector is a passive infra-red detection device (5) and said light detector is a photoresponsive device (6).

8. A lighting arrangement as claimed in any one of claims 3 to 7 including switch means (9) for adjusting the maximum power of said light source (3,4).

9. A lighting arrangement as claimed in any one of claims 3 to 8 including indicating means (N1) to indicate that mains supply is still connected thereto with said light source (3,4) extinguished.

10. A lighting arrangement as claimed in any one of claims 3 to 9 in which said presence detector (5) and said light detector (6) are mounted in a generally central location of said lamp fitting (1).

11. A lighting arrangement as claimed in claim 10 in which the control means is also located in said generally central location.

12. A lighting system for controlling the lighting conditions in a room, including a plurality of lamp fittings disposed at different locations in the room characterised in that the lamp fittings are lighting arrangements as claimed in any one of claims 3 to 11.

## Patentansprüche

1. Verfahren zur Steuerung der Beleuchtung eines örtlich festgelegten Bereichs (7) unter Verwendung einer dem örtlich festgelegten Bereich zugeordneten Lichtquelle (3, 4) umfassend:
Feststellung, ob eine Person in dem örtlich festgelegten Bereich anwesend ist oder nicht;
außerdem Messung der Lichtintensität in dem örtlich festgelegten Bereich;
Errichten eines Bezugs-Pegels für eine gemessene Lichtintensität;
Steuerung der Lichtquelle durch a) Aufrechterhaltung der Lichtqelle in einem dunkel leuchtenden Zustand, wenn keine Anwesenheit in dem örtlich festgelegten Bereich festgestellt wird; b) Aufrechterhaltung der Lichtquelle in einem dunkel leuchtenden Zustand, wenn eine Anwesenheit festgestellt wird und die gemessene Lichtintensität wenigstens den Bezugs-Pegel hat, und c) Schalten der Lichtquelle auf einen hochleuchtenden Zustand, der eine erhöhte Beleuchtung in dem örtlich festgelegten Bereich ergibt, und Aufrechterhaltung des hochleuchtenden Zustandes, wenn eine Anwesenheit festgestellt wurde und die gemessene Lichtintensität kleiner als der Bezugs-Pegel ist, dadurch gekennzeichnet,
daß sich die Lichtquelle (3, 4) in einer in sich abgeschlossenen Anordnung befindet, daß die Anwesenheit und die Lichtintensität von der Anordnung aus festgestellt werden, und daß das Verfahren ferner umfaßt:
Errichtung von minimalen und maximalen Ausgangspegeln innerhalb des hochleuchtenden Zustands für die Lichtquelle;
Einstellung der Lichtquelle während der Anwesenheit der Person in dem örtlich festgelegten Bereich zwischen dem minimalen und maximalen Pegel in Abhängigkeit von der gemessenen Lichtintensität, um in dem örtlich festgelegten Bereich eine im wesentlichen konstante Lichtintensität aufrechtzuerhalten;
Setzen der Lichtquelle auf einen dunklen oder heruntergeregelten Leuchtzustand, wenn während einer vorgegebenen Zeit keine Anwesenheit festgestellt wird;
und Setzen der Lichtquelle auf einen dunklen oder heruntergeregelten Zustand, wenn die gemessene Lichtintensität sich während einer vorgegebenen Zeitdauer an dem oder oberhalb des BezugsPegels befunden hat.

2. Verfahren nach Anspruch 1, umfassend:
Errichten eines maximalen und minimalen Wertes des BezugsPegels für die gemessenen Lichtintensität;
Schalten der Lichtquelle auf den hochleuchtenden Zustand, wenn eine Anwesenheit festgestellt wird und die Lichtintensität kleiner als der vorgegebene minimale Bezugs-Pegel ist;
Aufrechterhaltung des hochleuchtenden Zustands, wenn eine Anwesenheit festgestellt wird und die gemessene Lichtintensität kleiner als der vorgegebene maximale Bezugs-Pegel ist;
und Setzen der Lichtquelle auf einen dunklen oder heruntergeregelten Leuchtzustand, wenn die gemessene Lichtintensität sich während einer vorgegebenen Zeitdauer an dem oder oberhalb des maximalen Bezugs-Pegels befunden hat.

3. Beleuchtungsanordnung umfassend eine Lampenanordnung (1) mit einer Lichtquelle (3, 4) zur Beleuchtung eines örtlich festgelegten Bereichs (7); einen Detektor (5) zur Feststellung zur Anwesenheit einer Person in dem örtlich festgelegten Bereich (7); einen Licht-Detektor (6) zur Lieferung eines auf die Lichtintensität in dem örtlich festgelegten Bereich bezogenen Signals; und mit dem Anwesenheits-Detektor, dem Licht-Detektor und der Lichtquelle verbundenen Steuermitteln zur Steuerung der Lichtquelle, wobei die Steuermittel so ausgebildet sind, um a) die Lichtquelle in einem dunkel leuchtenden Zustanc zu halten, wenn eine Anwesenheit festgestellt wird und die Lichtintensität in dem örtlich festgelegten Bereich wenigstens einen Bezugs-Pegel hat; b) Schalten der Lichtquelle auf einen hochleuchtenden Zustand, der eine erhöhte Beleuchtung in dem örtlich festgelegten Bereich ergibt, und Aufrechterhaltung der Lichtquelle in dem hochleuchtenden Zustand, wenn eine Anwesenheit festgestellt wird und die Lichtintensität kleiner ist als der Bezugs-Pegel; c) Schalten der Lichtquelle auf einen dunkel leuchtenden Zustand, wenn die Feststellung einer Anwesenheit endet und d) Schalten der Lichtquelle auf einen dunkel leuchtenden Zustand, wenn die Lichtintensität den Bezugs-Pegel überschreitet, dadurch gekennzeichnet, daß die Anordnung eine in sich abgeschlossene Lampenanordnung (1) ist, in der der Anwesenheits-Detektor (5), der Licht-Detektor (6) und die Steuermittel enthalten sind, und daß die Steuermittel ferner enthalten: Mittel (12) zur Lichtregelung der Lichtquelle; Steuerschaltungen zur Einstellung der Lichtquelle während der Anwesenheit der Person in dem örtlich festgelegten Bereich zwischen minimalen und maximalen Lichtausgangs-Pegeln innerhalb des hochleuchtenden Zustands in Abhängigkeit von der von dem Licht-Detektor festgestellten Lichtintensität, um eine im wesentlichen konstante Lichtintensität in dem örtlich festgelegten Bereich aufrechtzuerhalten; erste Verzögerungsmittel zur Verzögerung des Schaltens auf einen dunklen oder heruntergeregelten Zustand um eine vorgegebene Zeitdauer, wenn die Feststellung einer Anwesenheit aufhört; und zweite Verzögerungsmittel zur Verzögerung des Schaltens auf einen dunklen oder heruntergeregelten Beleuchtungszustand um eine vorgegebene Zeitdauer, wenn die Lichtintensität den Bezugs-Pegel überschreitet.

4. Beleuchtungsanordnung nach Anspruch 3, die so ausgebildet ist, um a) die Lichtquelle auf einen hochleuchtenden Zustand zu schalten, der eine erhöhte Beleuchtung in dem örtlich festgelegten Bereich ergibt, wenn eine Anwesenheit festgestellt wird und die festgestellte Lichtintensität kleiner ist als ein erster minimaler Wert des Bezugs-Pegels, b) die Lichtquelle in dem hochleuchtenden Zustand zu halten, wenn eine Anwesenheit festgestellt wird und die festgestellte Lichtintensität kleiner als ein zweiter maximaler Wert des Bezugs-Pegels ist, und c) um die Lichtquelle auf einen dunklen oder heruntergeregelten BeleuchtungsZustand zu schalten, wenn die festgestellte Lichtintensität den maximalen Bezugs-Pegel überschreitet.

5. Beleuchtungsanordnung nach Anspruch 4, bei der die Steuerschaltungen so ausgebildet sind, daß sie den Betrieb des Anwesenheits-Detektors (5) sperren, wenn die festgestellte Lichtintensität den maximalen Bezugs-Pegel überschreitet.

6. Beleuchtungsanordnung nach einem der Ansprüche 3 bis 5, bei der die Mittel zum Lichtregeln ein herunterregelbares elektronisches Vorschaltgerät (12) sind, das elektrisch mit der Lichtquelle (3, 4) verbunden ist und eine Stromversorgung (21) zur Ansteuerung des Anwesenheits-Detektors (5) und des Licht-Detektors (6) liefert.

7. Beleuchtungsanordnung nach einem der Ansprüche 3 bis 6, bei der der Anwesenheits-Detektor eine passive Infrarot-Detektorvorrichtung (5) und der Licht-Detektor eine fotoempfindliche Vorrichtung (6) ist.

8. Beleuchtungsanordnung nach einem der Ansprüche 3 bis 7 mit Schaltermitteln (9) zur Einstellung der maximalen Leistung der Lichtquelle (3, 4).

9. Beleuchtungsanordnung nach einem der Ansprüche 3 bis 8 mit Anzeigemitteln (N1) zur Anzeige, daß die Netzversorgung noch bei erloschener Lichtquelle (3, 4) angeschlossen ist.

10. Beleuchtungsanordnung nach einem der Ansprüche 3 bis 9, bei der der Anwesenheits-Detektor (5) und der Licht-Detektor (6) in einem allgemein mittleren Ort der Lampenanordnung (1) gelagert sind.

11. Beleuchtungsanordnung nach Anspruch 10, bei der die Steuermittel ebenfalls in dem allgemein mittleren Ort angeordnet sind.

12. Beleuchtungs-System zur Steuerung der Lichtzustände in einem Raum, mit einer Vielzahl von Lampenanordnungen, die an unterschiedlichen Stellen in dem Raum angeordnet sind, dadurch gekennzeichnet, daß die Lampenanordnungen Beleuchtungsanordnungen gemäß einem der Ansprüche 3 bis 11 sind.

## Revendications

1. Procédé de commande de l'éclairage d'une zone localisée (7) en utilisant une source de lumière (3, 4) associée à la zone localisée, le procédé incluant :
la détection de la présence d'une personne dans la zone localisée ;
la détection en outre de l'intensité lumineuse dans la zone localisée ;
l'établissement d'un niveau de référence pour l'intensité lumineuse détectée ;
la commande de la source de lumière a) en maintenant la source de lumière dans une condition de faible luminosité lorsqu'aucune présence n'est détectée dans la zone localisée ; b) en maintenant la source de lumière dans une condition de faible luminosité lorsqu'une présence est détectée et que l'intensité lumineuse détectée est d'au moins ledit niveau de référence et c) en commutant la source de lumière dans une condition de luminosité élevée qui assure une luminosité augmentée dans la zone localisée et en maintenant la condition de luminosité élevée lorsqu'une présence est détectée et que l'intensité lumineuse détectée est inférieure au niveau de référence,
caractérisé en ce que :
la source de lumière (3, 4) est dans un appareil d'éclairage à fonctions incluses (1), en ce que la présence et l'intensité lumineuse sont détectées depuis l'appareil d'éclairage et en ce que le procédé inclut en outre :
l'établissement de niveaux de sortie minimum et maximum pour la condition de luminosité élevée pour la source de lumière ;
le réglage de la source de lumière pendant la présence de la personne dans ladite zone localisée entre les niveaux minimum et maximum en fonction de l'intensité lumineuse détectée afin de maintenir une intensité lumineuse sensiblement constante dans la zone localisée ;
l'établissement de la source de lumière dans une condition de faible luminosité ou d'obscurité lorsqu'aucune présence n'est détectée pendant un temps prédéterminé ; et
l'établissement de la source de lumière dans une condition de luminosité faible ou pâle lorsque l'intensité lumineuse détectée a été à ou au-dessus du niveau de référence pendant une période temporelle prédéterminée.

2. Procédé selon la revendication 1, incluant en outre :
l'établissement de valeurs maximum et minimum du niveau de référence pour l'intensité lumineuse détectée ;
la commutation de la source de lumière dans la condition de luminosité élevée lorsqu'une présence est détectée et que l'intensité lumineuse est inférieure au niveau de référence minimum prédéterminé ;
le maintien de la condition de luminosité élevée lorsqu'une présence est détectée et que l'intensité lumineuse détectée est inférieure au niveau de référence maximum prédéterminé ; et
l'établissement de la source de lumière dans une condition de faible luminosité ou d'obscurité lorsque l'intensité lumineuse détectée a été à ou au-dessus du niveau de référence maximum prédéterminé pendant une période temporelle prédéterminée.

3. Agencement d'éclairage incluant :
un appareil d'éclairage (1) incorporant une source de lumière (3, 4) pour éclairer une zone localisée (7) ; un détecteur de présence (5) pour détecter la présence d'une personne dans la zone localisée (7) ; un détecteur de lumière (6) pour produire un signal rapporté à l'intensité lumineuse dans la zone localisée ; et un moyen de commande connecté au détecteur de présence, au détecteur de lumière et à la source de lumière pour commander la source de lumière, le moyen de commande étant agencé a) pour maintenir la source de lumière dans une condition de faible luminosité lorsqu'une présence est détectée et que l'intensité lumineuse dans la zone localisée est d'au moins un niveau de référence ; b) pour commuter la source de lumière dans une condition de luminosité élevée qui assure un éclairage augmenté dans la zone localisée et pour maintenir la source de lumière dans la condition de luminosité élevée lorsqu'une présence est détectée et que l'intensité lumineuse est inférieure au niveau de référence ; c) pour commuter la source de lumière dans une condition de faible luminosité lorsque la détection d'une présence cesse et d) pour commuter la source de lumière dans une condition de faible luminosité lorsque l'intensité lumineuse excède le niveau de référence, caractérisé en ce que l'appareil d'éclairage est un appareil d'éclairage à fonctions incluses (1) comportant le détecteur de présence (5), le détecteur de lumière (6) et le moyen de commande inclus en son sein et le moyen de commande inclut en outre : un moyen (12) pour diminuer la source de lumière ; des circuits de commande pour régler la source de lumière pendant la présence de la personne dans ladite zone localisée entre des niveaux de sortie de lumière minimum et maximum pour la condition de luminosité élevée en réponse à l'intensité lumineuse détectée par ledit détecteur de lumière afin de maintenir une intensité lumineuse sensiblement constante dans la zone localisée ; un premier moyen de retard pour réaliser un retard d'une période prédéterminée lorsque la détection d'une présence cesse avant la commutation dans une condition de faible luminosité ou d'obscurité ; et un second moyen de retard pour réaliser un retard d'une période prédéterminée lorsque l'intensité lumineuse excède le niveau de référence avant la commutation dans la condition de faible luminosité ou d'obscurité.

4. Agencement d'éclairage selon la revendication 3, agencé a) pour commuter la source de lumière dans une condition de luminosité élevée qui assure un éclairage augmenté dans la zone localisée lorsqu'une présence est détectée et que l'intensité lumineuse détectée est inférieure à une première valeur minimum du niveau de référence, b) pour maintenir la source de lumière dans la condition de luminosité élevée lorsqu'une présence est détectée et que l'intensité lumineuse détectée est inférieure à une seconde valeur maximum du niveau de référence et c) pour commuter la source de lumière dans une condition de faible luminosité ou d'obscurité lorsque l'intensité lumineuse détectée excède le niveau de référence maximum.

5. Agencement d'éclairage selon la revendication 4, dans lequel les circuits de commande sont agencés pour inhiber le fonctionnement du détecteur de présence (5) lorsque l'intensité lumineuse détectée excède le niveau de référence maximum.

6. Agencement d'éclairage selon l'une quelconque des revendications 3 à 5, dans lequel le moyen de diminution est un variateur électronique (12) couplé électriquement à la source de lumière (3, 4) et il constitue une alimentation (21) pour commander le détecteur de présence (5) et le détecteur de lumière (6).

7. Agencement d'éclairage selon l'une quelconque des revendications 3 à 6, dans lequel ledit détecteur de présence est un dispositif de détection infrarouge passif (5) et ledit détecteur de lumière est un dispositif photosensible (6).

8. Agencement d'éclairage selon l'une quelconque des revendications 3 à 7, incluant un moyen de commutateur (9) pour régler la puissance maximum de ladite source de lumière (3, 4).

9. Agencement d'éclairage selon l'une quelconque des revendications 3 à 8, incluant un moyen d'indication (N1) pour indiquer que l'alimentation du secteur lui est encore connectée tandis que ladite source de lumière (3, 4) est éteinte.

10. Agencement d'éclairage selon l'une quelconque des revendications 3 à 9, dans lequel ledit détecteur de présence (5) et ledit détecteur de lumière (6) sont montés en un emplacement généralement central dudit appareil d'éclairage (1).

11. Agencement d'éclairage selon la revendication 10, dans lequel le moyen de commande est également placé au niveau dudit emplacement généralement central.

12. Système d'éclairage permettant de commander les conditions d'éclairage dans une pièce, incluant une pluralité d'appareils d'éclairage disposés en différents emplacements dans la pièce, caractérisé en ce que les appareils d'éclairage sont des agencements d'éclairage tels que revendiqués selon l'une quelconque des revendications 3 à 11.
